# EUROPÄISCHE PATENTSCHRIFT

(11) **EP 3 296 141 B1**
(45) Veröffentlichungstag und Bekanntmachung des Hinweises auf die Patenterteilung: **10.03.2021**
(21) Anmeldenummer: 17190878.3
(22) Anmeldetag: 13.09.2017
(51) Int. Cl.: B60L 5/08, B60L 5/40

(54) **STROMABNEHMER, SCHLEIFLEITUNGSSYSTEM UND SCHLEIFKONTAKT**
CURRENT COLLECTOR, SLIDING CONTACT CONDUCTOR SYSTEM AND SLIDING CONTACT
PRISE À CONTACT GLISSANT, SYSTÈME DE LIGNE DE CONTACT ET CONTACT GLISSANT

(30) Priorität: 15.09.2016 DE 102016117412
(43) Veröffentlichungstag der Anmeldung: 21.03.2018
(73) Patentinhaber: Conductix-Wampfler GmbH, 79576 Weil am Rhein (DE)
(72) Erfinder: Schmitt, Hans-Jürgen, 79591 Eimeldingen (DE)
(74) Vertreter: Charrier Rapp & Liebau

(56) Entgegenhaltungen:
- WO-A1-2015/180855
- US-A- 2 193 961
- US-A- 2 201 679
- US-A- 2 696 532
- US-E- R E19 513

## Beschreibung

Die Erfindung betrifft einen Stromabnehmer nach dem Oberbegriff des Anspruchs 1, ein Schleifleitungssystem nach dem Oberbegriff des Anspruchs 8 sowie einen Schleifkontakt nach dem Oberbegriff des Anspruchs 9.

Bei bekannten Schleifleitungssystemen werden längs einer Schleifleitung verfahrbare elektrische Verbraucher mittels an Leitersträngen der Schleifleitung elektrisch kontaktierenden Schleifkontakten mit Strom und Spannung versorgt. Hierzu weisen Stromabnehmer der elektrischen Verbraucher in der Regel mehrere Schleifkontakte, üblicherweise Schleifkohlen auf, welche in Schleifkontaktträgern angeordnet sind. Die Schleifkontaktträger werden meist federbewirkt gegen die Leiterstränge der Schleifleitung gedrückt. Die einzelnen Schleifkontakte sind üblicherweise über lange, oft einige Meter lange Versorgungsleitungen zu einem Schaltkasten des elektrischen Verbrauchers geführt, von wo aus die weitere elektrische Verteilung erfolgt. Um in einem elektrischen Störfall, z.B. einem Kurzschluss in der elektrischen Anlage des elektrischen Verbrauchers, das Überschreiten unerwünschter hoher Ströme zu vermeiden, sind im Schaltkasten üblicherweise Sicherungen zu den Versorgungsleitungen vorgesehen. Ebenso ist auf Seite der Schleifleitung vorgesehen, dass die einzelnen Leiterstränge der Schleifleitung einzeln oder gemeinsam über eine zusätzliche Sicherung gegen Überströme geschützt sind. Die Verwendung von Sicherungen ist dabei grundsätzlich bekannt.

So offenbart die DE 1 725 890 eine Motorschutzeinrichtung für Elektromotoren für Hilfsbetriebe auf elektrischen Fahrzeugen, wobei dort der Fahrzeugmotor über eine Sicherung an die Fahrdrahtleitung angeschlossen ist.

Die DE 2 312 863 offenbart eine Steuerung für verfahrbare Regalwagen, welche über Schleifkontakte mit einer Schleifleitung verbunden sind. Ein Schutz der elektrischen Antriebe der einzelnen Regalwagen vor Überstrom erfolgt dort über in den Zuleitungen zu den Schleifkontakten vorgesehenen Sicherungen.

Die US 2 696 532 A betrifft elektrische Verteilungssysteme mit Stromabnehmerwagen, bei denen ein offener Leiterträger verwendet wird, wobei die Stromabnehmerwagen Seitenwände und einen Boden haben, welche die Stromabnehmerwagenkontakte an ihren Eingriffspunkten mit der Schleifleitung vollständig abschirmen.

Die US RE 19 513 E bezieht sich auf die Stromabnehmer oder Stromabnehmerwagen, die Strom von einer Stromschiene abnehmen. So soll dort ein Laufkatzensystem bereitgestellt werden, so dass ein Arbeiter sein elektrisch angetriebenes Werkzeug zusammen mit dem Arbeitsgerät bewegen kann, während Strom unterbrechungsfrei abgenommen wird, und ohne das die Gefahr eines Hängenbleibens oder Kurzschlusses der stromleitenden Kabel besteht.

Die US 2 193 961 A betrifft einen Stromabnehmer mit Stromkollektorelementen zum Abnehmen von Strom von einem Hohlschlitzleiter. Dabei sollen die Stromkollektorelemente von geringem Gewicht und von kleiner Größe sein und eine hohe Wirtschaftlichkeit bei der Herstellung und Effizienz aufweisen. Hierzu wird ein lösbarer Verbinder zur Verwendung mit einem Hohlschlitzleiter bereitgestellt, an dessen Seiten Stromschienen mit einem Griff mit einer Basis und einem Kopf angeordnet sind, wobei letzterer durch den Schlitz in den Hohlschlitzleiter einführbar ist und Kontakte aufweist, die mit den seitlichen Sammelschienen des Kanals in Eingriff stehen, wenn sie in den Kanal eingeführt und darin gedreht wird, um den Schlitz zu spreizen, wobei der Sockel außerhalb des Kanals und in Eingriff mit der geschlitzten Wand bleibt, so dass letzterer zwischen dem Kopf und dem Sockel festgeklemmt wird.

Die US 2 201 679 A betrifft einen Stromabnehmerwagen für Schleifleitungen mit einem Körper mit Schleifleitungskontakten an der Oberseite und einer Kammer mit voneinander beabstandeten Abzweigschalterkontakten an der Unterseite, einer bewegbaren Abdeckung für die Kammer mit einem Schalterelement zum Schließen der Abzweigschaltung, wenn die Abdeckung geschlossen wird, und zum Unterbrechen der Abzweigschaltung, wenn die Abdeckung geöffnet wird.

Nachteilig bei den bekannten Vorrichtungen ist, dass die von den Schleifkontakten zum Schaltkasten geführten Versorgungsleitungen auf den durch die Sicherungen abgesicherten maximalen Strom ausgelegt werden müssen. Dies erfordert einen entsprechend großen Leiterquerschnitt der Versorgungsleitungen, der im Normalbetrieb gar nicht notwendig ist, was zu einem hohen, unnötigen Materialverbrauch für die Versorgungsleitungen führt.

Aufgabe der Erfindung ist es deshalb, einen Stromabnehmer, einen Schleifkontakt sowie ein Schleifleitungssystem bereitzustellen, welche die oben genannten Nachteile überwinden und eine sichere und zugleich materialsparende Stromübertragung zum elektrischen Verbraucher ermöglichen.

Die Erfindung löst die Aufgabe durch einen Stromabnehmer mit den Merkmalen des Anspruchs 1, ein Schleifleitungssystem mit den Merkmalen des Anspruchs 8 sowie einen Schleifkontakt mit den Merkmalen des Anspruchs 9. Vorteilhafte Weiterbildungen und Ausgestaltungen der Erfindung sind in den Unteransprüchen angegeben.

Erfindungsgemäß ist ein eingangs genannter Stromabnehmer dadurch gekennzeichnet, dass ein erster Kontakt der Sicherung den Schleifkontakt oder einen elektrisch leitend mit dem Schleifkontakt verbundenen Schleifkontakthalter elektrisch kontaktiert.
Dabei kann vorteilhaft die Sicherung im oder am Schleifkontakt angeordnet sein, wodurch der Leitungsweg zwischen Sicherung und Schleifkontakt sehr klein gehalten oder gar zu Null gemacht werden kann.

Besonders bevorzugt kann die Sicherung am Schleifkontaktträger angeordnet sein, wodurch jedem Schleifkontakt auf einfache Weise eine eigene Sicherung zugeordnet werden kann.

In einer montagetechnisch günstigen Ausführung kann die Sicherung austauschbar sein, um im Störfall eine zerstörte Sicherung möglichst schnell und einfach tauschen zu können. Insbesondere bei der Verwendung von Schmelzsicherungen oder anderen, im Störfall zur Zerstörung vorgesehenen Sicherungen kann dies vorteilhaft sein. Bevorzugt kann dabei die Sicherung eine Stecksicherung sein, welche in einen vorteilhaft vorgesehenen Sicherungssockel einsteckbar sein kann. Bevorzugt kann der Sicherungssockel am Schleifkontakt oder dem Schleifkontaktträger vorgesehen sein.

Erfindungsgemäß ist ein eingangs genanntes Schleifleitungssystem dadurch gekennzeichnet, dass dabei ein wie oben und nachfolgend beschriebener Stromabnehmer bzw. Schleifkontakt verwendet wird.

Weiter erfindungsgemäß ist ein eingangs genannter Schleifkontakt dadurch gekennzeichnet, dass ein erster Kontakt der Sicherung den Schleifkontakt oder einen elektrisch leitend mit dem Schleifkontakt verbundenen Schleifkontakthalter elektrisch kontaktiert. Hierdurch kann vorteilhaft der Abstand zwischen Schleifkontakt und Sicherungen so kurz wie möglich gewählt werden, im Idealfall sogar vollkommen vermieden werden.

Die Erfindung wird nachfolgend anhand von detaillierten Ausführungsbeispielen mit Bezug auf die begleitenden Zeichnungen beschrieben. Diese zeigen:
- **Fig. 1**: eine seitliche, zum Teil aufgeschnittene Draufsicht auf einen Abschnitt eines erfindungsgemäßen Schleifleitungssystems;
- **Fig. 2**: eine stirnseitige, schnittähnliche Draufsicht auf das Schleifleitungssystems aus Fig. 1;
- **Fig. 3**: eine schematische, zum Teil aufgeschnittene Detailansicht eines nicht zur Erfindung gehörigen Schleifkontaktträgers aus Fig. 1;
- **Fig. 4**: eine schematische, zum Teil aufgeschnittene Detailansicht eines erfindungsgemäßen alternativen Schleifkontaktträgers entsprechend Fig. 3;
- **Fig. 5**: eine schematische, zum Teil aufgeschnittene Detailansicht eines erfindungsgemäßen weiteren alternativen Schleifkontaktträgers entsprechend Fig. 3.

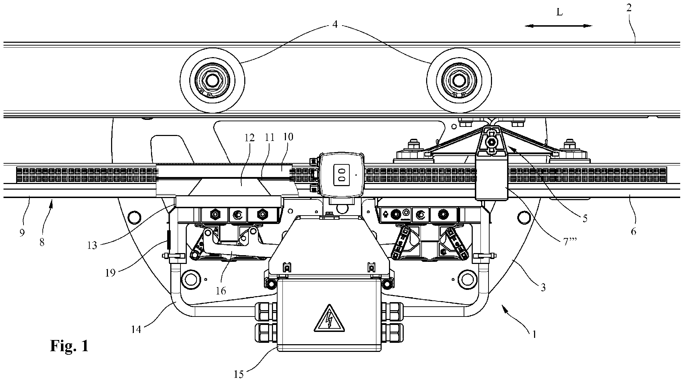

Fig. 1 zeigt eine seitliche Draufsicht auf einen Abschnitt eines erfindungsgemäßen Schleifleitungssystems 1 mit einem im Wesentlichen Doppel-U-förmigen Schienenstrang 2. An dem Schienenstrang 2 ist ein Stromabnehmer 3 eines nicht gezeichneten elektrischen Verbrauchers mit Laufrollen 4 in eine Längsrichtung L des Schienenstrangs 2 verfahrbar. Der Stromabnehmer 3 dient zur Versorgung des längs des Schienenstrangs 2 verfahrbaren elektrischen Verbrauchers sowie der darauf installierten elektrischen Einrichtungen, beispielsweise eines Containerkrans mit den unterschiedlichen elektrischen Fahr- und Hub antrieben.

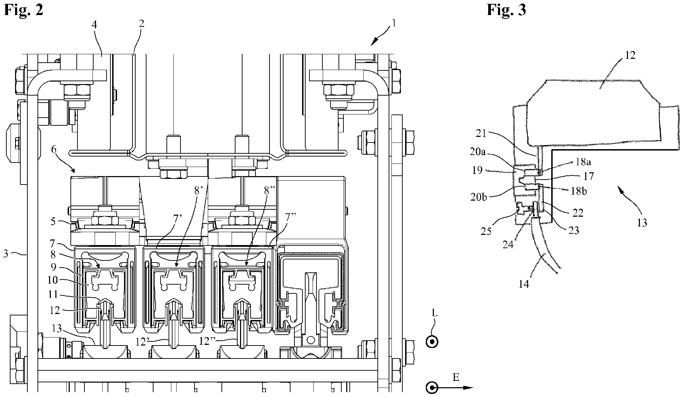

An der unteren Seite des Schienenstrangs 2 ist mittels in Längsrichtung L des Schienenstrangs 2 voneinander beabstandet angebrachten Schleifleitungshalterungen 5 eine Schleifleitung 6 nach unten hängend angebracht. Die Schleifleitung 6 weist dabei in Fig. 2 gut erkennbar drei nebeneinander angeordnete Leiterstranghalterungen 7, 7' und 7" zur Halterung von länglichen Phasenleitersträngen 8, 8' und 8" auf. Da die Phasenleiterstränge 8' und 8" identisch zum Phasenleiterstrang 8 ausgebildet sind, gelten die zum Phasenleiterstrang 8 gemachten Ausführungen entsprechend.

Der Phasenleiterstrang 8 weist ein längliches Isolierprofil 9 auf, welches von der Leiterstranghalterung 7 gehalten wird. In das Isolierprofil 9 ist wiederum ein längliches, elektrisch leitendes Phasenleiterprofil 10 mit ebenfalls elektrisch leitender länglicher Schleiffläche 11, bevorzugt aus Aluminium oder Stahl, eingesetzt.

An der Schleiffläche 11 entlang schleift ein als Schleifkohle ausgebildeter Schleifkontakt 12, welcher an einem Schleifkontaktträger 13 des Stromabnehmers 3 angeordnet ist. Der Schleifkontakt 12 ist über eine am Schleifkontaktträger 13 angebrachte elektrische Versorgungsleitung 14 mit einem Anschlusskasten 15 des elektrischen Verbrauchers verbunden, von wo aus die elektrischen Einrichtungen Mit elektrischen Strom und Spannung versorgt werden können, zum Beispiel über ein elektrisches Versorgungsnetz des elektrischen Verbrauchers.

Weiter kann der Schleifkontaktträger 13 mit Schleifkontakt 12 in an sich bekannter Weise über einen in Fig. 1 exemplarisch gezeigten, an sich bekannte Zustellmechanismus 16 an die Schleiffläche 11 heran und von dieser weg bewegt werden.

Im Betrieb wird der Schleifkontakt 12 ständig an die Schleiffläche 11 angedrückt, beispielsweise über Federkraft. In Fig. 2 gezeigte weitere Schleifkontakte 12' bzw. 12" mit zugehörigen Schleifkontaktträgern sind weitgehend identisch zum Schleifkontakt 12 und Schleifkontaktträger 13 ausgebildet, so dass die hierzu gemachten Ausführungen entsprechend gelten. Insbesondere weist jeder Schleifkontakt 12, 12' bzw. 12" einen eigenen Zustellmechanismus 16 auf.

Der Phasenleiterstrang 8 dient der Energieversorgung des verfahrbaren Verbrauchers und steht im Normalbetrieb unter Spannung, so dass Strom über die Schleiffläche 11 zu dem Schleifkontakt 12 fließt. Die oben beschriebene Ausbildung ist dem Fachmann grundsätzlich bekannt und Bedarf keiner weiteren Ausführungen.

Wie in der schematischen Detailansicht des Schleifkontaktträgers 13 in Fig. 3 erkennbar, ist an dem Schleifkontaktträger 13 ein Stecksockel 17 mit Kontakten 18a, 18b für eine an sich bekannte Flachstecksicherung 19 mit Steckkontakten 20a, 20b vorgesehen, wie sie beispielsweise im Kraftfahrzeugbereich verwendet wird und nach ISO 8820-3 genormt ist. Es können aber auch andere Sicherungen und Sicherungstypen verwendet werden.

Der Stecksockel 17 ist mit dem in Fig. 3 oberen und dem Schleifkontakt 12 näheren ersten Kontakt 18a für den ersten Steckkontakt 20a der Stecksicherung 19 über eine erste Verbindungsleitung 21 mit dem Schleifkontakt 12 elektrisch leitend verbunden. Am anderen Kontakt 18b des Stecksockels 17 für den zweiten Steckkontakt 20b der Stecksicherung 19 ist eine zweite Verbindungsleitung 22 zu einem Versorgungsanschluss 23 für die Versorgungsleitung 14 des elektrischen Verbrauchers geführt. Hierzu weist die Versorgungsleitung 14 eine Anschlusslasche 24 auf, welche in an sich bekannter Weise über eine Befestigungsschraube 25 lösbar mit dem Versorgungsanschluss 23 verbindbar ist.

Durch die sehr nahe am Schleifkontakt 12 angeordnete Sicherung 19 kann die zwischen Schleifkontakt 12 und Sicherung 19 verlaufende erste Verbindungsleitung 21 so kurz wie möglich gehalten werden. Bevorzugt beträgt die Entfernung nur wenige Millimeter bis wenige Zentimeter. Somit muss nur die erste Verbindungsleitung 21 den für den durch die Sicherung 19 abgesicherten maximalen Strom im Störfall notwendigen Leitungsquerschnitt aufweisen.

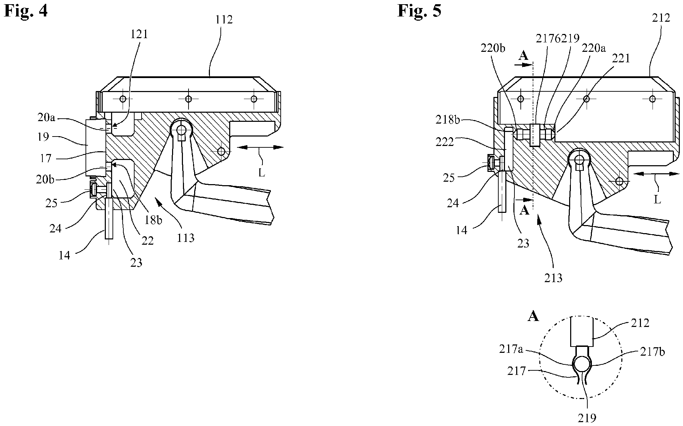

Fig. 4 zeigt eine schematische, zum Teil aufgeschnittene Detailansicht eines erfindungsgemäßen alternativen Schleifkontaktträgers 113, welcher dem in Fig. 3 gezeigten Schleifkontaktträger 13 in weiten Teilen entspricht. Ausführungen zu dem Schleifkontaktträger 13 gelten deshalb entsprechend auch für den Schleifkontaktträger 113. Auch werden gleiche Teile deshalb mit denselben Bezugszeichen bezeichnet, entsprechende Teile mit demselben Bezugszeichen und einer vorangestellten "1", also Schleifkontakt 112 in Fig. 4 anstelle von Schleifkontakt 12 in Fig. 3.

Die in Fig. 4 gezeigte Ausgestaltung des Schleifkontaktträgers 113 unterscheidet sich dabei vor allem dadurch von dem in Fig. 3 gezeigten Schleifkontaktträger 13, dass ein alternativer Schleifkontakt 112 selbst einen Kontakt 121 zur direkten elektrischen Kontaktierung mit dem Steckkontakt 20a der Stecksicherung 19 ausbildet. Hierdurch kann vorteilhaft vollkommen auf die in Fig. 3 gezeigte Verbindungsleitung 21 zwischen Stecksockel 17 und Schleifkontakt 13 verzichtet werden, so dass der Abstand zwischen Stecksicherung 19 und Schleifkontakt 112 weiter verringert und faktisch auf Null reduziert werden kann.

In einer später im Detail erläuterten Fig. 5 zeichnerisch dargestellten vorteilhaften Ausgestaltung kann die Sicherung oder ein Sockel für die Sicherung auch direkt in den Schleifkontakt, insbesondere eine Schleifkohle integriert sein. Hierdurch kann die Verbindungsleitung zwischen Sicherung und Schleifkontakt noch kürzer gemacht werden, besonders bevorzugt sogar vollständig wegfallen. Zudem kann hierdurch der Austausch der Sicherung vereinfacht werden, da der Schleifkontakt ohnehin austauschbar ausgebildet ist, da er sich im Lauf der Zeit abnützt und ausgetauscht werden muss. Es können aber auch andere Arten von Sicherungen vorgesehen werden.

Fig. 5 zeigt eine schematische, zum Teil aufgeschnittene Detailansicht eines erfindungsgemäßen weiteren alternativen Schleifkontaktträgers 213, welcher dem in Fig. 3 gezeigten Schleifkontaktträger 13 in weiten Teilen entspricht. Ausführungen zu dem Schleifkontaktträger 13 gelten deshalb entsprechend auch für den Schleifkontaktträger 213. Auch werden gleiche Teile deshalb mit denselben Bezugszeichen bezeichnet, entsprechende Teile mit demselben Bezugszeichen und einer vorangestellten "2", also Schleifkontakt 212 in Fig. 5 anstelle von Schleifkontakt 12 in Fig. 3.

Der in Fig. 5 gezeigte Schleifkontaktträger 213 unterscheidet sich dabei vor allem dadurch von dem in Fig. 3 gezeigten Schleifkontaktträger 13, dass ein alternativer Schleifkontakt 212 selbst einen Kontakt 221 zur direkten elektrischen Kontaktierung mit einem schleifkontaktseitigen ersten Kontakt 220a einer Stecksicherung 219 ausbildet. Eine zweiter Kontakt 220b der Stecksicherung 219 kontaktiert dann einen Kontakt 218b einer Verbindungsleitung 222 zwischen Sicherung 219 und dem Versorgungsanschluss 23.

Hierdurch kann vorteilhaft vollkommen auf die in Fig. 3 gezeigte Verbindungsleitung 21 zwischen Stecksockel 17 und Schleifkontakt 13 verzichtet werden, so dass der Abstand zwischen Stecksicherung 19 und Schleifkontakt 212 weiter verringert und faktisch auf Null reduziert werden kann.

Weiter weist der Schleifkontakt 212 eine alternativen Sicherungssockel 217 zum lösbaren Halten der Sicherung 219 auf. Da sich der Schleifkontakt 219, welcher üblicherweise aus Kupfer, Graphit oder ähnlichen geeignetem und dem Fachmann an sich bekannten Materialien besteht, im Laufe der Zeit abnutzt, bringt diese Lösung den Vorteil mit sich, dass der Schleifkontakt 212 gemeinsam mit der Sicherung 219 einfach und schnell ausgetauscht werden kann. Hierdurch kann mit jedem Austausch des Schleifkontakts 212 sichergestellt werden, dass eine funktionsfähige Sicherung 219 installiert wird, ohne die Sicherung 219 gesondert prüfen und ggf. austauschen zu müssen.

In dem Detail A in Fig. 5 ist ein Querschnitt durch den Sicherungssockel 217 und die Sicherung 219 längs der strichpunktierten Schnittlinie A-A dargestellt. Der Sicherungssockel 217 weist dabei zwei einander gegenüberliegende Halteschenkel 217a, 217b auf, zwischen denen die Sicherung 219 klemmend gehalten wird. Zum verbesserten Halten können die Halteschenkel 217a, 217b im Bereich der Sicherung 219 an deren Außenkontur angepasst sein, beispielsweise die im Detail in Fig. 5 dargestellte Ausbuchtungen aufweisen. Alternativ oder zusätzlich können die freien Enden der Halteschenkel 217a, 217b trichterförmig aufeinander zulaufen, wobei der Abstand der Halteschenkel 217a, 217b geringer ist als die Breite der Sicherung 219. Die Sicherung 219 wird dann gegen den Widerstand der Halteschenkel 217a, 217b, welche dabei etwas auseinandergedrückt werden, in den Sicherungssockel 217 gedrückt und ruht dann gut gegen Herausfallen gesichert zwischen den beiden Ausbuchtungen der Halteschenkel 217a, 217b.

Es können aber auch andere Arten von Sicherungssockeln verwendet werden, oder beispielsweise zwei nebeneinander angeordnete Sicherungssockel 217 anstelle von nur einem Sicherungssockel 217. Auch kann ein Sicherungssockel direkt aus dem Material des Schleifkontakts 219 oder des Schleifkontaktträger 213 ausgebildet werden.

Alternativ kann die Sicherung 219 bei der in Fig. 5 dargestellten Ausführung anstelle am Schleifkontakt 212 auch am Schleifkontaktträger 213 austauschbar angeordnet werden, so dass sich nach wie vor der Vorteil des direkten elektrischen Kontakts zwischen Sicherung 219 und Schleifkontakt 212 ergibt. Ggf. kann hierzu auch der im Detail in Fig. 5 gezeigte Sicherungssockel 217 am Schleifkontaktträger 213 angeordnet sein.

Bevorzugt kann der Schleifkontakt 12, 112 bzw. 212 lösbar mit dem Schleifkontaktträger 13, 113 bzw. 213 verbunden sein, um ein einfaches und schnelles Austauschen des Schleifkontakts 12, 112 bzw. 212 zu ermöglichen.

Weiter kann der Schleifkontakt 12, 112 bzw. 212 auch noch in einem zusätzlichen, bevorzugt an den Schleifkontakt 12, 112 bzw. 212 angeformten, Schleifkontakthalter aufgenommen werden. Der Schleifkontakthalter kann dabei gemeinsam mit dem Schleifkontakt 12, 112 bzw. 212 mit dem Schleifkontaktträger 13, 113 bzw. 213 verbunden, insbesondere eingesteckt werden. Besteht der Schleifkontakthalter aus einem elektrisch leitenden Material oder ist auf einer oder mehrer dem Schleifkontakt 212 zugewandten Seiten mit einem solchen Material beschicht und ist zudem elektrisch leitend, bevorzugt großflächig an den Seitenflächen, mit dem Schleifkontakt 12, 112 bzw. 212 verbunden, so kann der in Fig. 4 und 5 gezeigte direkte elektrische Kontakt zwischen Sicherung 19 bzw. 219 auch mit dem Schleifkontakthalter anstatt mit dem Schleifkontakt 12, 112 bzw. 212 erfolgen. Gleichwohl wird hierdurch der Abstand zwischen Sicherung 19 bzw. 219 und Schleifkontakt 112 bzw. 212 weiter verringert, so dass eine zusätzliche Verbindungsleitung zwischen Sockel 17 und Schleifkontakt 12, wie in Fig. 3 gezeigt, vermieden werden kann. Dies gilt insbesondere bei einer großflächigen elektrischen Kontaktierung zwischen Schleifkontakthalter und Schleifkontakt.

Weiter kann der Sicherungssockel bevorzugt auch aus dem Material des Schleifkontakts und/oder des Schleifkontaktträgers ausgebildet sein, so dass kein zusätzliches Bauteil für den Sicherungssockel angebracht werden muss. So kann der Schleifkontaktträger zur Aufnahme der Sicherung eine Ausnehmung aufweisen, welche zur Ausbildung des Sicherungssockels einen an die Form der Sicherung angepassten Querschnitt aufweist. Beispielsweise kann der Schleifkontaktträger 213 aus Fig. 5 im Bereich der Sicherung 219 eine Ausnehmung aufweisen, wobei der Sicherungssockel 217 aus dem Material des Schleifkontaktträgers 213 mit in Fig. 5 nach oben offener, also zum Schleifkontakt 219 hin gewandten trichterförmigen Öffnung ausgebildet ist. Vorteilhaft kann dies bei einem Schleifkontaktträger 213 aus einem elektrisch isolierenden Material, insbesondere Kunststoff, realisiert werden.

### Bezugszeichen

- 1: Schleifleitungssystem
- 2: Schienenstrang
- 3: Stromabnehmer
- 4: Laufrollen
- 5: Schleifleitungshalterungen
- 6: Schleifleitung
- 7, 7', 7": Leiterstranghalterungen
- 8, 8', 8": Phasenleiterstränge
- 9: Isolierprofil
- 10: Phasenleiterprofil
- 11: Schleiffläche Phasenleiterstrang
- 12, 12', 12": Schleifkontakte
- 13: Schleifkontaktträger
- 14: Versorgungsleitung zum Verbraucher
- 15: Anschlusskasten
- 16: Zustellmechanismus
- 17: Stecksockel
- 18a, 18b: Kontakte Stecksockel
- 19: Stecksicherung
- 20a, 20b: Steckkontakte Sicherung
- 21: Verbindungsleitung Stecksockel-Schleifkontakt
- 22: Verbindungsleitung Stecksockel-Verbraucher
- 23: Versorgungsanschluss für Versorgungsleitung
- 24: Anschlusslasche
- 25: Befestigungsschraube

- 112: alternativer Schleifkontakt
- 113: alternativer Schleifkontaktträger
- 121: Kontakt Schleifkontakt
- 212: weiterer alternativer Schleifkontakt
- 213: weiterer alternativer Schleifkontaktträger
- 217: Sicherungssockel
- 217a, 217b: Halteschenkel
- 218b: Kontakt Verbindungsleitung
- 219: Schmelzsicherung
- 220a, 220b: Kontakte Sicherung
- 221: Kontakt Schleifkontakt
- 222: Verbindungsleitung Sicherung-Verbraucher

- L: Längsrichtung Schleifleitung

## Patentansprüche

1. Stromabnehmer (3) für einen elektrischen Verbraucher mit mindestens einem Schleifkontaktträger (113; 213) mit einem Schleifkontakt (112; 212) zur Kontaktierung mit mindestens einem elektrischen leitenden Leiterprofil (10) einer Schleifleitung (6), wobei der Schleifkontakt (112; 212) elektrisch leitend mit einem elektrischen Anschluss (15) des elektrischen Verbrauchers verbindbar ist, und wobei zwischen dem Schleifkontakt (112; 212) und dem Anschluss (15) des elektrischen Verbrauchers eine elektrische Sicherung (19; 219) vorgesehen ist, **dadurch gekennzeichnet, dass** ein erster Kontakt (20a; 220a) der Sicherung (19; 219) den Schleifkontakt (112; 212) oder einen elektrisch leitend mit dem Schleifkontakt (112; 212) verbundenen Schleifkontakthalter elektrisch kontaktiert.

2. Stromabnehmer (3) nach Anspruch 1, **dadurch gekennzeichnet, dass** die Sicherung (219) im oder am Schleifkontakt (212) angeordnet ist.

3. Stromabnehmer (3) nach Anspruch 1, **dadurch gekennzeichnet, dass** die Sicherung (219) am Schleifkontaktträger (113) angeordnet ist.

4. Stromabnehmer (3) nach einem der voranstehenden Ansprüche, **dadurch gekennzeichnet, dass** die Sicherung (219) austauschbar ist.

5. Stromabnehmer (3) nach einem der voranstehenden Ansprüche, **dadurch gekennzeichnet, dass** die Sicherung eine Stecksicherung (19) ist.

6. Stromabnehmer (3) nach einem der voranstehenden Ansprüche, **dadurch gekennzeichnet, dass** zur Aufnahme der Sicherung (219) ein Sicherungssockel (17) vorgesehen ist.

7. Stromabnehmer (3) nach einem der voranstehenden Ansprüche, **dadurch gekennzeichnet, dass** der Sicherungssockel (217) am Schleifkontakt (112; 212) oder dem Schleifkontaktträger (113; 213) vorgesehen ist.

8. Schleifleitungssystem (1) mit einer Schleifleitung (6) und mindestens einem an der Schleifleitung (6) in deren Längsrichtung (L) verfahrbaren elektrischen Verbraucher, der einen Stromabnehmer (3) mit mindestens einem Schleifkontakt (112; 212) zur Kontaktierung mit mindestens einem elektrischen leitenden Leiterprofil (10) der Schleifleitung (6) aufweist, wobei der Schleifkontakt (112; 212) elektrisch leitend mit einem elektrischen Anschluss (15) des elektrischen Verbrauchers verbunden ist, wobei der Stromabnehmer (3) nach einem der Ansprüche 1 bis 7 ausgebildet ist.

9. Schleifkontakt (112; 212) für einen Stromabnehmer (3) eines an einer Schleifleitung (6) in deren Längsrichtung (L) verfahrbaren elektrischen Verbrauchers, wobei der Schleifkontakt (112; 212) elektrisch leitend mit einem elektrischen Anschluss (15) des elektrischen Verbrauchers verbindbar ist, wobei eine Sicherung (19; 219) im oder am Schleifkontakt (112; 212) angeordnet ist, wobei die Sicherung (19; 219) zwischen dem Schleifkontakt (112; 212) und dem Anschluss (15) des elektrischen Verbrauchers vorgesehen ist, **dadurch gekennzeichnet, dass** ein erster Kontakt (20a; 220a) der Sicherung (19; 219) den Schleifkontakt (112; 212) oder einen elektrisch leitend mit dem Schleifkontakt (112; 212) verbundenen Schleifkontakthalter elektrisch kontaktiert.

## Claims

1. Current collector (3) for an electrical load with at least one sliding contact support (113; 213) with a sliding contact (112; 212) for making contact with at least one electrically conductive conductor profile (10) of a conductor rail (6), wherein the sliding contact (112; 212) is connectable to an electrical connection (15) of the electrical load in electrically conductive manner, and wherein an electrical fuse (19; 219) is provided between the sliding contact (112; 212) and the connection (15) of the electrical load, **characterised in that** a first contact (20a; 220a) of the fuse (19; 219) electrically contacts the sliding contact (112; 212) or a sliding contact holder connected to the sliding contact (112; 212) in electrically conductive manner.

2. Current collector (3) according to claim 1, **characterised in that** the fuse (219) is arranged in or on the sliding contact (212).

3. Current collector (3) according to claim 1, **characterised in that** the fuse (219) is arranged on the sliding contact support (113).

4. Current collector (3) according to one of the preceding claims, **characterised in that** the fuse (219) is replaceable.

5. Current collector (3) according to one of the preceding claims, **characterised in that** the fuse is a plug-in fuse (19).

6. Current collector (3) according to one of the preceding claims, **characterised in that** a fuse socket (17) is provided to receive the fuse (219).

7. Current collector (3) according to one of the preceding claims, **characterised in that** the fuse socket (217) is provided on the sliding contact (112; 212) or the sliding contact support (113; 213).

8. Conductor rail system (1) with a conductor rail (6) and at least one electrical load which is movable on the conductor rail (6) in its longitudinal direction (L) and has a current collector (3) with at least one sliding contact (112; 212) for making contact with at least one electrically conductive conductor profile (10) of the conductor rail (6), wherein the sliding contact (112; 212) is connected to an electrical connection (15) of the electrical load in electrically conductive manner, wherein the current collector (3) is designed according to one of claims 1 to 7.

9. Sliding contact (112, 212) for a current collector (3) of an electrical load which is movable on a conductor rail (6) in its longitudinal direction (L), wherein the sliding contact (112; 212) is connectable to an electrical connection (15) of the electrical load in electrically conductive manner, wherein a fuse (19; 219) is arranged in or on the sliding contact (112; 212), wherein the fuse (19; 219) is provided between the sliding contact (112; 212) and the connection (15) of the electrical load, **characterised in that** a first contact (20a; 220a) of the fuse (19; 219) electrically contacts the sliding contact (112; 212) or a sliding contact holder connected to the sliding contact (112; 212) in electrically conductive manner.

## Revendications

1. Prise de courant (3) pour un consommateur électrique avec au moins un support (113; 213) de contact glissant avec un contact glissant (112 ; 212) pour la mise en contact avec au moins un profilé conducteur (10) électroconducteur d'une ligne de contact (6), dans laquelle le contact glissant (112 ; 212) peut être relié par électroconduction à un raccord électrique (15) du consommateur électrique, et dans laquelle entre le contact glissant (112 ; 212) et le raccord (15) du consommateur électrique un fusible électrique (19; 219) est prévu, **caractérisée en ce qu'**un premier contact (20a ; 220a) du fusible (19 ; 219) est en contact électrique avec le contact glissant (112 ; 212) ou un socle de contact glissant relié par électroconduction au contact glissant (112 ; 212) .

2. Prise de courant (3) selon la revendication 1, **caractérisée en ce que** le fusible (219) est agencé dans ou au niveau du contact glissant (212).

3. Prise de courant (3) selon la revendication 1, **caractérisée en ce que** le fusible (219) est agencé au niveau du support (113) de contact glissant.

4. Prise de courant (3) selon l'une des revendications précédentes, **caractérisée en ce que** le fusible (219) est interchangeable.

5. Prise de courant (3) selon l'une des revendications précédentes, **caractérisée en ce que** le fusible est un fusible enfiché (19).

6. Prise de courant (3) selon l'une des revendications précédentes, **caractérisée en ce qu'**un socle de fusible (17) est prévu pour la réception du fusible (219).

7. Prise de courant (3) selon l'une des revendications précédentes, **caractérisée en ce que** le socle de fusible (217) est prévu au niveau du contact glissant (112; 212) ou du support (113 ; 213) de contact glissant.

8. Système de ligne de contact (1) avec une ligne de contact (6) et au moins un consommateur électrique déplaçable au niveau de la ligne de contact (6) dans son sens longitudinal (L), qui présente une prise de courant (3) avec au moins un contact glissant (112 ; 212) pour la mise en contact avec au moins un profilé conducteur (10) électroconducteur de la ligne de contact (6), dans lequel le contact glissant (112 ; 212) est relié par électroconduction à un raccord électrique (15) du consommateur électrique, dans lequel la prise de courant (3) est réalisée selon l'une des revendications 1 à 7.

9. Contact glissant (112 ; 212) pour une prise de courant (3) d'un consommateur électrique déplaçable au niveau d'une ligne de contact (6) dans son sens longitudinal (L), dans lequel le contact glissant (112 ; 212) peut être relié par électroconduction à un raccord électrique (15) du consommateur électrique, dans lequel un fusible (19 ; 219) est agencé dans ou au niveau du contact glissant (112; 212), dans lequel le fusible (19; 219) est prévu entre le contact glissant (112 ; 212) et le raccord (15) du consommateur électrique, **caractérisé en ce qu'**un premier contact (20a; 220a) du fusible (19; 219) est en contact électrique avec le contact glissant (112 ; 212) ou un socle de contact glissant relié par électroconduction au contact glissant (112 ; 212).
